# EUROPEAN PATENT SPECIFICATION

(11) **EP 2 581 292 B1**
(45) Date of publication and mention of the grant of the patent: **25.06.2014**
(21) Application number: 12186194.2
(22) Date of filing: 26.09.2012
(51) Int. Cl.: B62B 3/06, B60P 1/52

(54) **Load handling trolley**
Lasttransportwagen
Chariot de manipulation de charges

(30) Priority: 11.10.2011 GB 201117549
(43) Date of publication of application: 17.04.2013
(73) Proprietor: Blackrock Engineering Limited, Great Budworth, Nr. Northwich, Cheshire CW9 6HF (GB)
(72) Inventor: Irwin, Robert, Liverpool, L19 2NY (GB)
(74) Representative: Cawley, Aimee Elizabeth

(56) References cited:
- EP-A1- 0 133 042
- JP-A- 2005 239 335

## Description

The present invention relates to load handling trolleys of the type that normally run in channel tracks. Such load handling trolleys comprise elongate load engagers which are raisable and lowerable relative to bogies (or other such wheeled trolleys), sometimes via ramp-and-roller means, as the load engager and the bogies are caused to move longitudinally relative to each other.

A number of developments to load handling trolleys have been made over recent decades by the present applicant, from the inclusion of positive retention means between the load engager and a bogie assembly, as described in EP0133042A1, to alternative forms of such positive retention means as described in EP1251056A1, to the current version of load handling trolley described and claimed in EP1897749A2, and in use today

JP2005-2393354A describes another load handling trolley. The trolley has a cargo receiving platform which can be raised and lowered relative to a wheeled carrier via a roller and ramp. The cargo receiving platform and carrier are tethered together by hinged arms which are rotatably mounted on the carrier and have a protrusion received in a slot in the ramp of the cargo receiving platform. The arms hinge relative to the carrier when the cargo receiving platform is raised or lowered.

Figures 1 and 2 illustrate a prior art load handling trolley of the type described in EP1897749A2. A load handling trolley 10 has a load engager 12 of inverted channel section, so that its web 14 will be upwards to engage a load (not shown) and its side walls 16, 18 will depend downwardly. Between side walls 16, 18, and in closely adjacent clearance thereto, are bogie assemblies 20. Bogie assemblies 20 have spaced sides 22, 24 interconnected by studs 26, rollers 28 and journalled rods 30 for articulation links 32 between bogie assemblies 20, of which there are at least two per load engager.

Studs 26 also interconnect raising-and-lowering means 34 for raising and lowering bogie assemblies 20 situated between bogie side walls 22, 24. Raising-and-lowering means 34 comprises a pair of spaced walls 36 having a roller 38 mounted therebetween. Associated with roller 38 is a ramp 40 secured to the underside of load engager 12 by screws 41, whereby, from a lowered position, movement of the bogie assemblies 20 along load engager 12 causes roller 38 to move over ramp 40 to urge load engager 12 upwards relative to bogie assemblies 20.

Outside faces of sides 22, 24 of bogie assemblies 20 have grooves 42 therein, along which pins 44 (shown in dotted outline), located on the inside faces of side walls 16, 18 of load engage 12 travel as load engager 12 moves upwardly or downwardly relative to bogie assemblies 20. Grooves 42 have a first lower part 46 parallel to the lower edges of sides 22, 24 of bogie assemblies 20, an angled major portion 48 corresponding to the slope of ramp 40 and an upper portion 50 parallel to the top edge of sides 22, 24 of bogie assemblies 20. Upper portion 50 occupies a projection 52 extending above the major part of the top edge of sides 22, 24 of bogie assemblies 20. The end of lower part 46 of groove 42 is closed to limit the extent of travel of pins 44, whilst the end of upper part 50 of groove 42 is open to allow fitting of bogie assemblies 20 to load engager 12.

To provide maximum elevation of load engager 12 relative to bogie assemblies 20 in prior art load handling trolley 10, projections 52 of sides 22, 24 of bogie assemblies 20 are accommodated in the lowered position in apertures 54 provided in the top of load engager 12, so as not to be proud thereof. When bogie assemblies 20 are moved longitudinally relative to load engager 12, grooves 42 in projections 52 allow load engager 12 to be raised higher than would be possible with previously known bogie assembly sides.

As shown, the mechanism for moving bogie assemblies 20 longitudinally relative to load engager 12 is conventional. A crank 56 is pivotally connected between side walls 16, 18 of load engager 12 to pivot about a pin 58. Side walls 16, 18 of load engager 12 are connected by an end wall 60, and the top of load engager 12 at its end is open at 62 to receive an operating lever (not shown) that engages in a hole 66 in the top of crank 56. Pivotally connected to crank 56 is a pair of laterally spaced links 68 (only one of which is shown). Pair of crank links 68 is pivotally connected to a respective one of sides 22, 24 of bogie assembly 20 by way of a pivot pin connection 70. Each crank link 68 carries a pivot pin 72, which acts as an abutment.

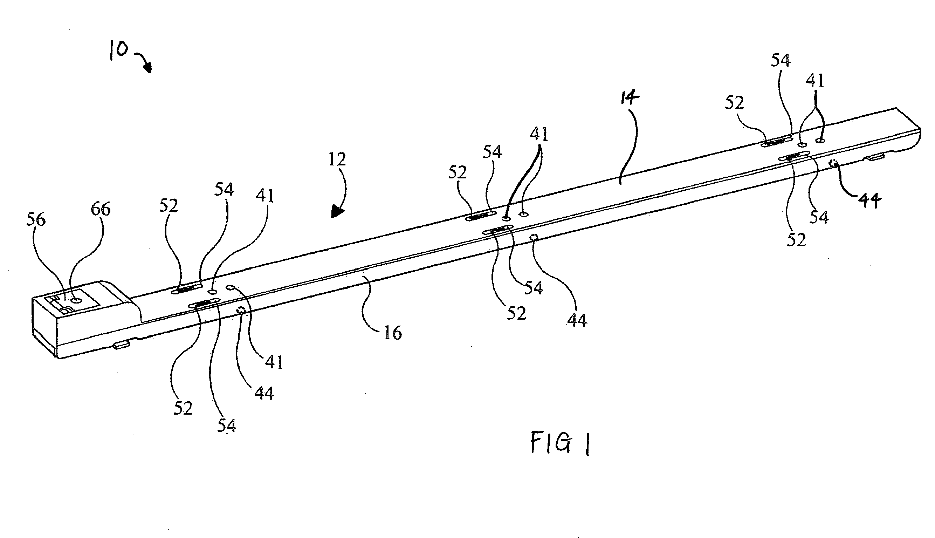

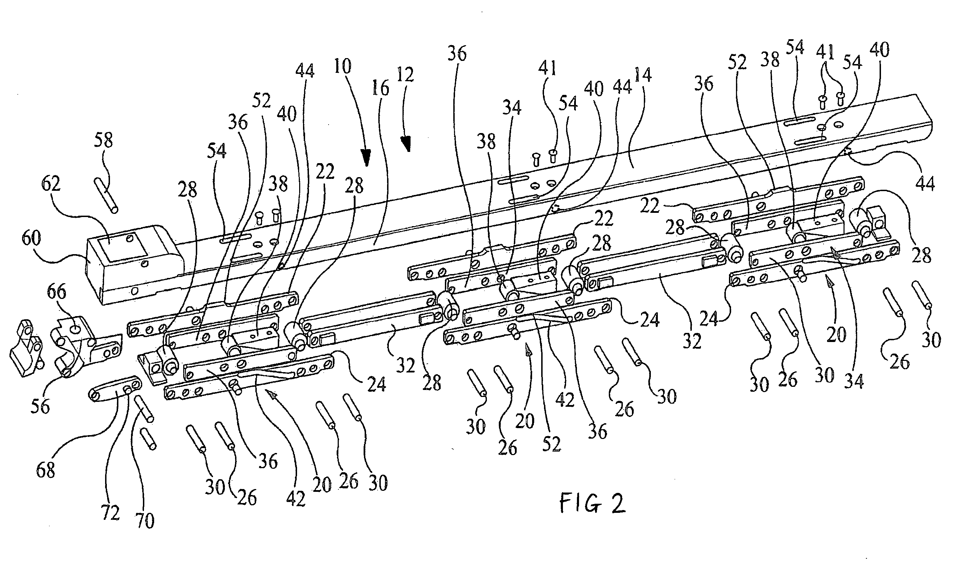

When it is required to elevate load engager 12 relative to a track (not shown) in which it is located, an operating lever (not shown) is inserted into crank 56 and pivoted anticlockwise (according to the current viewpoint in Figures 1 and 2) to move crank 56 and thus displace bogie assembly 20 longitudinally by action of links 68. The displacement of bogie assembly 20 causes ramp 40 to be raised by roller 38 and hence load engager 12 is moved to a raised position for movement of load handling trolley 10 along said track. The maximum displacement is such as to move pins 44 along grooves 42 to their upper portions 50.

Where rollers 28 are in contact with said aforementioned track in normal operation of load handling trolley 10, a clearance remains between pin 72 and the end surface of sides 22, 24 of bogie assembly 20. In the situation where load handling trolley 10 projects beyond an end of said track, absence of abutment pin 72 would result in considerable angular displacement between link 68 and bogie assembly 20. However, by providing abutment pin 72, angular movement is constrained and, therefore, despite the fact that the end bogie 20 may be considered not to be sufficiently supported, longitudinal movement is generated to give the desired lift by movement of roller 38 against ramp 40.

Although extremely successful, in the spirit of achieving continuous improvement in design and function, the present inventor has determined a manner of improving the design of such known load handling trolleys, which brings a number of benefits which will be described hereinafter.

Accordingly, the present invention provides a load handling trolley, of the type that normally runs in a channel-led track, comprising: an elongate load engager, having a load-receiving surface, which is raisable and lowerable relative to at least one bogie assembly via raising-and-lowering means and a ramp which together cause the load engager and the bogie assembly to move longitudinally relative to each other, said raising-and-lowering means being comprised in the at least one bogie assembly and said ramp being provided on an underside of the load-receiving surface, wherein the ramp comprises guiding means, and the raising-and-lowering means comprises a pair of spaced walls, each being provided with a transverse protrusion which is arranged so as to movably cooperate with the guiding means of the ramp, thereby enabling raising and lowering of the load engager relative to the at least one bogie assembly.

Provision of such a novel load handling trolley is advantageous for a number of reasons. Unlike prior art load handling trolleys in which the inside faces of the side walls of the load engager are provided with pins or studs which fit into grooves or slots provided in the side walls of the bogie assemblies fitted therein to enable raising and lowering of the load engager relative to the bogie assemblies by means of a ramp fitted to the underside of the load engager (substantially as show in prior art Figures 1 and 2), the present invention has simplified the design and construction of such load handling trolleys by providing the ramp fitted to the underside of the load engager with guiding means, and by providing the bogie assemblies with a raising-and-lowering means, which is movably cooperable with the guiding means of the ramp.

Such an arrangement has been found by the present inventor to be extremely beneficial because, although in the prior art engagers the pins provided in the depending side walls of the load engager were not designed to be intentionally load bearing, it was often the case, somewhat inevitably, that these elements did indeed become load bearing with the sometime result that the pins would shear off from the inside faces of the load engager. To repair the load handling trolley in such cases would be expensive as the entire load engager would need to be replaced in order for one pair of interior pins to be replaced, as the pins are cast as an integral part of the load engager. Furthermore, although the bogie assemblies were designed to be load bearing, providing grooves or slots in their side walls actually led to weak points in the side walls, and a further possible failure mode.

The present invention overcomes these problems by providing the ramp on the underside of the load engager with guiding means and the at least one bogie assembly with a raising-and-lowering means including a pair of spaced walls each provided with a transverse protrusion; the inside faces of the load engager are no longer provided with pins or pegs, and the bogie assemblies are no longer provided with slots or grooves. As a result, if either of the ramp or the raising-and-lowering means should fail, either is easily, simply and cheaply replaceable.

Preferably the ramp comprises a substantially wedge-shaped body having at least one inclined surface from which depend a pair of substantially triangular-shaped side surfaces, a flat surface opposite to the at least one inclined surface and an end surface; the ramp thus has a "thin end" and a "fat end". The guiding means is preferably provided as undercuts in the triangular-shaped side surfaces of the body below the at least one inclined surface forming contact surfaces. Preferably, the ramp resembles an inverted-T when viewed from its end surface (i.e. its fat end) with the flat surface facing upwardly.

The ramp is preferably provided with at least two, contiguous inclined surfaces having a first and a second angle of inclination respectively, with the greatest angle of inclination being from where a first inclined surface meets the flat surface (i.e. from its thin end), and the lesser angle of inclination being from where the first inclined surface meets a second inclined surface (i.e. to its fat end). Provision of at least two such contiguous inclined surfaces is advantageous as it reduces the return force, from the first inclined surface having the greater angle of inclination to the second inclined surface having the lesser angle of inclination, that may otherwise act in the opposite direction to the force exerted by the mechanism (such as a ratchet mechanism or a hydraulic drive mechanism) that causes the load engager and the bogie assembly to move longitudinally relative to each other to raise the load engager. This force reduction is greatest towards the fat end of the ramp, i.e. towards the end of the second inclined surface distal from the first inclined surface.

The end surface of the ramp may furthermore be provided with a tail portion. This tail portion may be formed as a further undercut, this time in the end surface of the body below the at least one inclined surface.

The flat surface of the ramp is preferably provided with fixing means which enable the ramp to be affixed to the underside of the load-receiving surface of the load engager. Mutual fixing means may be provided in appropriate locations in the load engager. The ramp may usually be fixed substantially centrally with respect to the longitudinal axis of the load engager, such that the guiding means extend longitudinally.

The transverse protrusions of the raising-and-lowering means are preferably each in the form of a pin, stud, peg or the like which extends inwardly towards the longitudinal axis of the load engager, so as to be movably cooperable with the guiding means of the ramp. Further preferably, the protrusions are provided in the form of a pair of opposed pins, studs or pegs, each of which extends inwardly towards the longitudinal axis of the load engager.

The raising-and-lowering means preferably further comprises a roller associated with the ramp. When the load engager is in its lowered position, the (thin end) of the ramp may rest on, or nearly rest on, the roller, and when the load engager is caused to be raised, the at least one inclined surface of the ramp is caused to contact (if not already in contact) and travel over the roller towards its end surface (the fat end) to an end point, which defines the extent of travel.

The spaced side walls may each have a projection above a top edge of a major portion of its length, in which projection the associated transverse protrusion may preferably be located. The projection is preferably accommodated in an aperture provided in the load-receiving surface of the load engager when the load engager is in a lowered position.

Consequentially, the at least one transverse protrusion is locatable adjacent to, but above, the guiding means of the ramp, which is wholly located within the at least one bogie assembly, when the load engager is in its lowered position, in which the load handling trolley is movable. When the load engager is in its raised position, the at least one transverse protrusion has been caused to move along the length of the guiding means, such that the ramp is wholly located above the at least one bogie assembly, with the result that the maximum possible lift of the load engager relative to the at least one bogie assembly has been achieved.

The present invention will now be more particularly described, by way of non-limiting example only, with reference to the accompanying schematic drawings (not to scale), in which:
Figure 1 shows a prior art load handling trolley as hereinbefore described;
Figure 2 is an exploded view of the prior art load handling trolley of Figure 1;
Figures 3a, 3b and 3c show, in longitudinal cross-section, a load handling trolley in accordance with the invention between its lowered and raised positions respectively;
Figures 4a, 4b and 4c show transverse cross sections of the load handling trolley shown in Figures 3a, 3b and 3c taken along lines A-A, B-B and C-C of Figures 3a, 3b and 3c respectively;
Figure 5 is a first perspective view of a ramp usable in a load handling trolley of the invention;
Figure 6 is a second perspective view of the ramp of Figure 5;
Figure 7 is a third perspective view of the ramp of Figures 5 and 6;
Figure 8 is partial view of a portion of the load engager shown in Figures 3a, 3b, 3c, 4a, 4b and 4c; and
Figure 9 is partial view of a portion of the load handling trolley shown in Figures 3a, 3b, 3c, 4a, 4b and 4c.

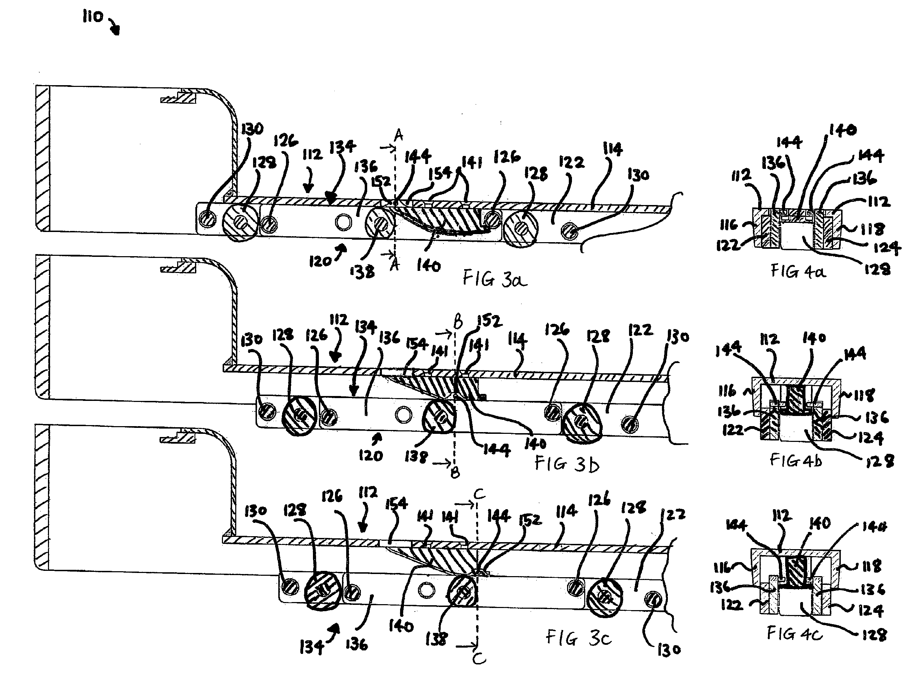

Referring to the Figures 3a, 3b, 3c, 4a, 4b and 4c, a load handling trolley 110 has a load engager 112 of inverted channel section, so that its web 114, in the form of a load-receiving surface, will be upwards to engage a load (not shown) and its (optional) side walls 116, 118 will depend downwardly. Between side walls 116, 118 and in closely adjacent clearance thereto are bogie assemblies 120. Bogie assemblies 120 have spaced sides 122, 124 interconnected by studs 126, rollers 128 and journalled rods 130 for articulation links (not shown) between bogie assemblies 120, of which there are at least two per load engager.

Studs 126 also interconnect raising-and-lowering means 134 for raising and lowering bogie assemblies 120 situated between bogie side walls 122, 124. Raising-and-lowering means 134 comprises a pair of spaced walls 136, each being provided with a pin 144 which extends transversely and inwardly towards the longitudinal axis of load engager 112, having a roller 138 mounted therebetween. Associated with roller 138 is a ramp 140 secured to the underside of the load engager 112 by screws 141, whereby, from a lowered position, movement of the bogie assemblies 120 in a longitudinal direction along the load engager 112 causes the roller 138 to move over the ramp 140 to urge the load engager 112 upwards relative to the bogie assemblies 120.

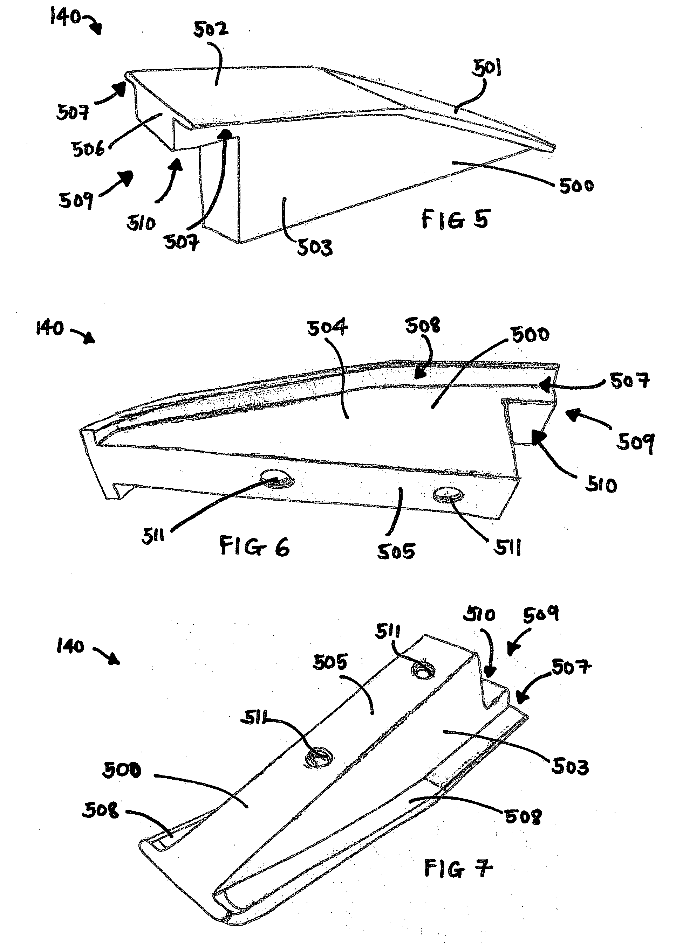

As shown in Figures 5, 6 and 7, ramp 140 comprises a substantially wedge-shaped body 500 having a first inclined surface 501 and a second inclined surface 502, from the both of which depend a pair of substantially triangular-shaped side surfaces 503, 504, a flat surface 505 opposite to the first and second inclined surfaces 501, 502 and an end surface 506; ramp 140 thus has a "thin end" and a "fat end".

Ramp 140 is provided with a guiding means, in the form of a pair of undercuts 507 in triangular-shaped side surfaces 503, 504 of body 500 below first and second inclined surfaces 501, 502 forming a pair of contact surfaces 508. Each of triangular-shaped side surfaces 503. 504 is provided with such an undercut, such that ramp 140 resembles an inverted-T when viewed from its end surface 506 (i.e. its fat end) with flat surface 505 facing upwardly.

End surface 506 of ramp 140 is furthermore provided with a tail portion 509, which is formed as a further undercut 510 in end surface 506 of body 500 below the second inclined surface 502.

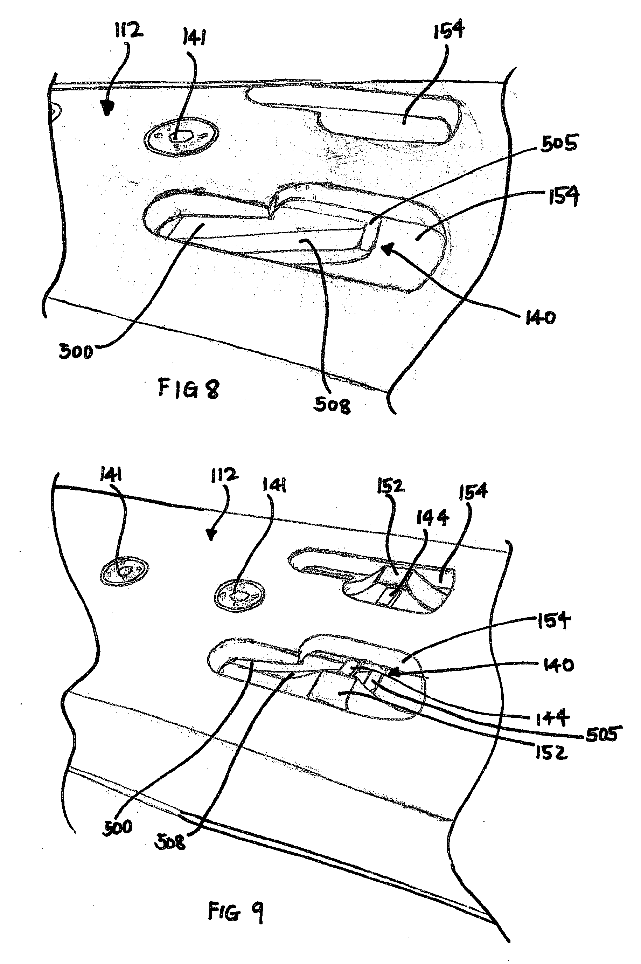

Flat surface 505 of ramp 140 is provided with fixing means, in the form of screw holes 511, 512, which enable ramp 140 to be affixed to the underside of load-receiving surface 114 of load engager 112, via screws 141. Mutual fixing means may be provided in appropriate locations in the load engager. Ramp 140 is fixed substantially centrally with respect to the longitudinal axis of load engager 112, such that the guiding means extend longitudinally, as shown in Figures 3a, 3b, 3c, 4a, 4b and 4c, and also in Figure 8.

In order to provide maximum elevation of load engager 112 relative to bogie assemblies 120, projections 152 of raising-and-lowering means 134 are accommodated, in the lowered position, in apertures 154 in the load-receiving surface 154 of load engager 112, so as not to be proud thereof, as shown in Figures 3a, 4a and 9. When bogie assemblies 120 are moved longitudinally relative to load engager 112, as shown in Figures 3b and 4b, to a maximum lift height, as shown in Figures 3c and 4c, load engager 112 is caused to be raised at least as high as is achievable with the prior art load handling trolley described and illustrated in Figures 1 and 2 herein.

Longitudinal displacement of bogie assemblies 120 causes ramp 140 to be raised by roller 138 and hence load engager 112 is moved to a raised position as shown in Figures 3c and 4c of the drawings for movement of load handling trolley 110 along a track (not shown). The maximum displacement is such as to move pins 144 along contact surfaces 508 of ramps 140 to their end points of travel. Lowering of load engager 112 is achieved by causing bogie assemblies 120 to be displaced in the opposite direction, thereby causing pins 144 to move in the opposite direction along contact surfaces 508 of ramps 140 until pins 144 are once again located in apertures 154 in load-receiving surface 114.

The mechanism for moving the bogie assemblies 120 longitudinally relative to the load engager may be conventional, such as that described in EP1897749A2, or any other ratchet-type drive mechanism or hydraulic drive mechanism.

## Claims

1. A load handling trolley (110), of the type that normally runs in a channel-led track, comprising:
an elongate load engager (112), having a load-receiving surface (114), which is raisable and lowerable relative to at least one bogie assembly (120) via raising-and-lowering means (134) and a ramp (140) which together cause the load engager (112) and the bogie assembly (120) to move longitudinally relative to each other, said raising-and-lowering means (134) being comprised in the at least one bogie assembly (120) and said ramp (140) being provided on an underside of the load-receiving surface (114),
wherein the ramp (140) comprises guiding means (508), and the raising-and-lowering means (134) comprises a pair of spaced walls (136), each being provided with a transverse protrusion (144) which is arranged so as to movably cooperate with the guiding means (508) of the ramp (140), thereby enabling raising and lowering of the load engager (112) relative to the at least one bogie assembly (120).

2. A load handling trolley (110) as claimed in claim 1 wherein the ramp (140) comprises a substantially wedge-shaped body (500) having at least one inclined surface (501, 502) from which depend a pair of substantially triangular-shaped side surfaces (503, 504), a flat surface (505) opposite to the at least one inclined surface (501, 502) and an end surface (506).

3. A load handling trolley (110) as claimed in claim 2 wherein the guiding means (508) is provided as undercuts (507) in the triangular-shaped side surfaces (503, 504) of the body (500) below the at least one inclined surface (501, 502) forming contact surfaces (508).

4. A load handling trolley (110) as claimed in claim 2 or 3 wherein the ramp (140) is provided with at least two, contiguous inclined surfaces (501, 502) having a first (Θ₁) and a second (Θ₂) angle of inclination respectively.

5. A load handling trolley (110) as claimed in any of claims 2 to 4 wherein the end surface (506) of the ramp (140) is provided with a tail portion (509).

6. A load handling trolley (110) as claimed in claim 5 wherein the tail portion (509) is formed as a further undercut (510) in the end surface (506) of the body (500) below the at least one inclined surface (501, 502).

7. A load handling trolley (110) as claimed in any of claims 2 to 6 wherein the flat surface (505) of the ramp (140) is provided with fixing means (511, 512) which enable the ramp (140) to be affixed to the underside of the load-receiving surface (114) of the load engager (112).

8. A load handling trolley (110) as claimed in claim 7 wherein mutual fixing means (141) are provided in appropriate locations in the load engager (112).

9. A load handling trolley (110) as claimed in any preceding claim wherein the ramp (140) is fixed substantially centrally with respect to a longitudinal axis of the load engager (112), such that the guiding means (508) extend longitudinally.

10. A load handling trolley (110) as claimed in any preceding claim wherein the transverse protrusions (144) of the raising-and-lowering means (134) are each in the form of a pin, stud, peg or the like which extends inwardly towards a longitudinal axis of the load engager (112), so as to be movably cooperable with the guiding means (508) of the ramp (140).

11. A load handling trolley (110) as claimed in claim 10 wherein the protrusions (144) are provided in the form of a pair of opposed pins, studs or pegs, each of which extends inwardly towards the longitudinal axis of the load engager (112).

12. A load handling trolley (110) as claimed in any preceding claim wherein the raising-and-lowering means (134) comprises a roller (138) associated with the ramp (140).

13. A load handling trolley (110) as claimed in any preceding claim wherein the spaced walls (136) each have a projection (152) above a top edge of a major
portion of its length, in which projection (152) the associated transverse protrusion (144) is located.

14. A load handling trolley (110) as claimed in claim 13 wherein the projection (152) is accommodated in an aperture (154) provided in the load-receiving surface (114) of the load engager (112) when the load engager (112) is in a lowered position.

## Patentansprüche

1. Lasttransportwagen (110) der Ausführung, die normalerweise in einer Kanallaufbahn läuft, der aufweist:
eine längliche Lasteingriffsvorrichtung (112) mit einer Lastaufnahmefläche (114), die relativ zu mindestens einer Fahrgestellbaugruppe (120) mittels eines Hebe- und Absenkmittels (134) und einer Rampe (140) anhebbar und absenkbar ist, die zusammen bewirken, dass sich die Lasteingriffsvorrichtung (112) und die Fahrgestellbaugruppe (120) in Längsrichtung relativ zueinander bewegen, wobei das Hebe- und Absenkmittel (134) in der mindestens einen Fahrgestellbaugruppe (120) einbegriffen ist und die Rampe (140) auf einer Unterseite der Lastaufnahmefläche (114) bereitgestellt wird,
wobei die Rampe (140) Führungsmittel (508) aufweist, und wobei das Hebe- und Absenkmittel (134) ein Paar beabstandete Wände (136) aufweist, wobei eine jede mit einem Quervorsprung (144) versehen ist, der so angeordnet ist, dass er beweglich mit den Führungsmitteln (508) der Rampe (140) zusammenwirkt, wodurch das Anheben und Absenken der Lasteingriffsvorrichtung (112) relativ zu der mindestens einen Fahrgestellbaugruppe (120) ermöglicht wird.

2. Lasttransportwagen (110) nach Anspruch 1, bei dem die Rampe (140) einen im Wesentlichen keilförmigen Körper (500) mit mindestens einer geneigten Fläche (501, 502) aufweist, von der sich ein Paar im Wesentlichen dreieckig geformte Seitenflächen (503, 504), eine flache Fläche (505) entgegengesetzt der mindestens einen geneigten Fläche (501, 502) und eine Endfläche (506) erstrecken.

3. Lasttransportwagen (110) nach Anspruch 2, bei dem die Führungsmittel (508) als Unterschnitte (507) in den dreieckig geformten Seitenflächen (503, 504) des Körpers (500) unterhalb der mindestens einen geneigten Fläche (501, 502) vorhanden sind, die Kontaktflächen (508) bilden.

4. Lasttransportwagen (110) nach Anspruch 2 oder 3, bei dem die Rampe (140) mit mindestens zwei benachbarten geneigten Flächen (501, 502) mit jeweils einem ersten (θ₁) und einem zweiten Neigungswinkel (θ₂) versehen ist.

5. Lasttransportwagen (110) nach einem der Ansprüche 2 bis 4, bei dem die Endfläche (506) der Rampe (140) mit einem hinteren Endabschnitt (509) versehen ist.

6. Lasttransportwagen (110) nach Anspruch 5, bei dem der hintere Endabschnitt (509) als ein weiterer Unterschnitt (510) in der Endfläche (506) des Körpers (500) unterhalb der mindestens einen geneigten Fläche (501, 502) gebildet wird.

7. Lasttransportwagen (110) nach einem der Ansprüche 2 bis 6, bei dem die flache Fläche (505) der Rampe (140) mit einem Befestigungsmittel (511, 512) versehen ist, damit die Rampe (140) an der Unterseite der Lastaufnahmefläche (114) der Lasteingriffsvorrichtung (112) befestigt werden kann.

8. Lasttransportwagen (110) nach Anspruch 7, bei dem gegenseitige Befestigungsmittel (141) an geeigneten Stellen in der Lasteingriffsvorrichtung (112) bereitgestellt werden.

9. Lasttransportwagen (110) nach einem der vorhergehenden Ansprüche, bei dem die Rampe (140) im Wesentlichen mittig mit Bezugnahme auf eine Längsachse der Lasteingriffsvorrichtung (112) befestigt wird, so dass sich die Führungsmittel (508) in der Längsrichtung erstrecken.

10. Lasttransportwagen (110) nach einem der vorhergehenden Ansprüche, bei dem die Quervorsprünge (144) des Hebe- und Absenkmittels (134) jeweils in der Form eines Stiftes, Bolzens, Zapfens oder dergleichen vorliegen, der sich nach innen in Richtung einer Längsachse der Lasteingriffsvorrichtung (112) erstreckt, um so mit den Führungsmitteln (508) der Rampe (140) in beweglicher Weise zusammenwirken zu können.

11. Lasttransportwagen (110) nach Anspruch 10, bei dem die Vorsprünge (144) in der Form eines Paares von gegenüberliegenden Stiften, Bolzen oder Zapfen vorhanden sind, von denen sich ein jedes nach innen in Richtung der Längsachse der Lasteingriffsvorrichtung (112) erstreckt.

12. Lasttransportwagen (110) nach einem der vorhergehenden Ansprüche, bei dem das Hebe- und Absenkmittel (134) eine Rolle (138) aufweist, die mit der Rampe (140) verbunden ist.

13. Lasttransportwagen (110) nach einem der vorhergehenden Ansprüche, bei dem die beabstandeten Wände (136) jeweils einen Überstand (152) über einem oberen Rand eines Hauptabschnittes ihrer Länge aufweisen, wobei im Überstand (152) der dazugehörende Quervorsprung (144) angeordnet wird.

14. Lasttransportwagen (110) nach Anspruch 13, bei dem der Überstand (152) in einer Öffnung (154) aufgenommen wird, die in der Lastaufnahmefläche (114) der Lasteingriffsvorrichtung (112) vorhanden ist, wenn sich die Lasteingriffsvorrichtung (112) in einer abgesenkten Position befindet.

## Revendications

1. Chariot de manutention de charges (110), du type se déplaçant normalement dans une piste à canal de guidage, comprenant :
un moyen d'engagement de la charge allongé (112), comportant une surface de réception de la charge (114) pouvant être soulevée et abaissée par rapport à au moins un assemblage de bogie (120) par l'intermédiaire d'un moyen de soulèvement et d'abaissement (134), et une rampe (140), entraînant ensemble un déplacement longitudinal relatif entre le moyen d'engagement de la charge (112) et l'assemblage de bogie (120), ledit moyen de soulèvement et d'abaissement (134) étant compris dans le au moins un assemblage de bogie (120) et ladite rampe (140) étant agencée sur un côté inférieur de la surface de réception de la charge (114) ;
dans lequel la rampe (140) comprend des moyens de guidage (508), le moyen de soulèvement et d'abaissement (134) comprenant une paire de parois espacées (136), comportant chacune une saillie transversale (144) agencée de sorte à coopérer de manière mobile avec les moyens de guidage (508) de la rampe (140), pour permettre ainsi le soulèvement et l'abaissement du moyen d'engagement de la charge (112) par rapport audit au moins un assemblage de bogie (120).

2. Chariot de manutention de charges (110) selon la revendication 1, dans lequel la rampe (140) comprend un corps ayant pour l'essentiel une forme en coin (500), comportant au moins une surface inclinée (501, 502), à partir de laquelle s'étend une paire de surfaces latérales de forme essentiellement triangulaire (503, 504), une surface plate (505) opposée à ladite au moins une surface inclinée (501, 502) et une surface d'extrémité (506).

3. Chariot de manutention de charges (110) selon la revendication 2, dans lequel les moyens de guidage (508) sont établis sous forme d'évidements (507) dans les surfaces latérales de forme triangulaire (503, 504) du corps (500) au-dessous de la au moins une surface inclinée (501, 502), formant des surfaces de contact (508).

4. Chariot de manutention de charges (110) selon les revendications 2 ou 3, dans lequel la rampe (140) comporte au moins deux surfaces inclinées contiguës (501, 502), formant respectivement un premier (θ₁) et un deuxième (θ₂) angle d'inclinaison.

5. Chariot de manutention de charges (110) selon l'une quelconque des revendications 2 à 4, dans lequel la surface d'extrémité (506) de la rampe (140) comporte une partie de queue (509).

6. Chariot de manutention de charges (110) selon la revendication 5, dans lequel la partie de queue (509) a la forme d'un évidement additionnel (510) dans la surface d'extrémité (506) du corps (500), au-dessous de ladite au moins une surface inclinée (501, 502).

7. Chariot de manutention de charges (110) selon l'une quelconque des revendications 2 à 6, dans lequel la surface plate (505) de la rampe (140) comporte un moyen de fixation (511, 512), permettant la fixation de la rampe (140) sur le côté inférieur de la surface de réception de la charge (114) du moyen d'engagement de la charge (112).

8. Chariot de manutention de charges (110) selon la revendication 7, dans lequel des moyens de fixation mutuels (141) sont agencés dans des emplacements appropriés dans le moyen d'engagement de la charge (112).

9. Chariot de manutention de charges (110) selon l'une quelconque des revendications précédentes, dans lequel la rampe (140) est fixée pour l'essentiel de manière centrale par rapport à un axe longitudinal du moyen d'engagement de la charge (112), de sorte que les moyens de guidage (508) s'étendent longitudinalement.

10. Chariot de manutention de charges (110) selon l'une quelconque des revendications précédentes, dans lequel les saillies transversales (144) du moyen de soulèvement et d'abaissement (134) ont chacune la forme d'une goupille, d'un goujon, d'une cheville ou similaire, s'étendant vers l'intérieur, en direction d'un axe longitudinal du moyen d'engagement de la charge (112), de sorte à pouvoir coopérer de manière mobile avec les moyens de guidage (508) de la rampe (140).

11. Chariot de manutention de charges (110) selon la revendication 10, dans lequel les saillies (144) ont la forme d'une paire de goupilles, de goujons ou de chevilles opposées, s'étendant chacune vers l'intérieur en direction de l'axe longitudinal du moyen d'engagement de la charge (112).

12. Chariot de manutention de charges (110) selon l'une quelconque des revendications précédentes, dans lequel le moyen de soulèvement et d'abaissement (134) comprend un rouleau (138) associé à la rampe (140).

13. Chariot de manutention de charges (110) selon l'une quelconque des revendications précédentes, dans lequel les parois espacées (136) comportent chacune une protubérance (152) au-dessus d'un bord supérieur d'une majeure partie de sa longueur, la saillie transversale associée (144) étant agencée dans cette protubérance (152).

14. Chariot de manutention de charges (110) selon la revendication 13, dans lequel la protubérance (152) est reçue dans une ouverture (154) formée dans la surface de réception de la charge (114) du moyen d'engagement de la charge (112) lorsque le moyen d'engagement de la charge (112) se trouve dans une position abaissée.
